# EUROPEAN PATENT APPLICATION

(11) **EP 3 869 397 A2**
(43) Date of publication of application: **25.08.2021**
(21) Application number: 21180729.2
(22) Date of filing: 22.06.2021
(51) Int. Cl.: G06K 9/00, G06K 9/32

(54) **METHOD, APPARATUS, DEVICE AND STORAGE MEDIUM FOR PROCESSING IMAGE**

(30) Priority: 18.12.2020 CN 202011507975
(71) Applicant: Beijing Baidu Netcom Science and Technology Co., Ltd., Beijing 100085 (CN)
(72) Inventor: LYU, Pengyuan, Beijing, 100085 (CN); ZHANG, Chengquan, Beijing, 100085 (CN)
(74) Representative: Nederlandsch Octrooibureau

(57) **Abstract**

The present disclosure provides a method, apparatus, device and storage medium for processing an image, relates to the field of artificial intelligence, and in particular, relates to the fields of computer vision and deep learning. A specific implementation is: acquiring a target image; determining at least one stamp image included in the target image; determining position information of a character in the at least one stamp image; and determining a text in the at least one stamp image based on the position information. This implementation may recognize stamps in images and texts in the stamps through simple steps.

## Description

### TECHNICAL FIELD

The present disclosure relates to the field of artificial intelligence, in particular, to the fields of computer vision and deep learning, and more in particular, to a method, apparatus, device and storage medium for processing an image.

### BACKGROUND

Stamps are widely used as tools for signature and authentication in documents. With the development of information technology, the need for stamp recognition in office automation or government affair automation is increasing. However, unlike the ordinary text recognition, stamps are difficult to be recognized due to their following characteristics: 1) there are many types of text, that is, there are horizontal texts, curved texts and multi-line texts; 2) curved texts generally have large arcs.

The existing stamp recognition methods are generally complicated.

### SUMMARY

A method, apparatus, device and storage medium for processing an image are provided.

According to a first aspect, a method for processing an image is provided, and the method includes: acquiring a target image; determining at least one stamp image included in the target image; determining position information of a text in the at least one stamp image; and determining the text in the at least one stamp image based on the position information.

According to a second aspect, an apparatus for processing an image is provided, the apparatus includes: an image acquisition unit configured to acquire a target image; a stamp determining unit configured to determine at least one stamp image included in the target image; a position determining unit configured to determine position information of a text in the at least one stamp image; and a text determining unit configured to determine the text in the at least one stamp image based on the position information.

According to a third aspect, an electronic device for processing an image is provided, and the electronic device includes: at least one processor; and a memory communicatively connected with the at least one processor, where the memory stores instructions executable by the at least one processor, and the instructions, when executed by the at least one processor, cause the at least one processor to execute the method as described in the first aspect.

According to a fourth aspect, a non-transitory computer readable storage medium storing computer instructions is provided, where the computer instructions cause a computer to execute the method as described in the first aspect.

According to a fifth aspect, a computer program product including a computer program is provided, and the computer program, when executed by a computing unit, implements the method as described in the first aspect.

The technique according to the present disclosure provides a simple stamp detection and recognition method, which may recognize stamps in images and texts in the stamps through simple steps.

It should be appreciated that the content described in this section is not intended to identify the key or critical features of embodiments of the present disclosure, nor is it intended to limit the scope of the present disclosure. The other features of the present disclosure will become easy to understand through the following description.

### BRIEF DESCRIPTION OF THE DRAWINGS

The accompanying drawings are intended to provide a better understanding of the present disclosure and do not constitute a limitation to the present disclosure.
Fig. 1 is an example system architecture to which the present disclosure may be applied;
Fig. 2 is a flowchart of an embodiment of a method for processing an image according to the present disclosure;
Fig. 3 is a schematic diagram of an application scenario of the method for processing an image according to the present application;
Fig. 4 is a flowchart of another embodiment of the method for processing an image according to the present disclosure;
Fig. 5 is a schematic structural diagram of an embodiment of an apparatus for processing an image according to the present disclosure; and
Fig. 6 is a block diagram of an electronic device for implementing the method for processing an image according to an embodiment of the present disclosure.

### DETAILED DESCRIPTION OF EMBODIMENTS

Example embodiments of the present disclosure are described below in combination with the accompanying drawings, where various details of the embodiments of the present disclosure are included to facilitate understanding and should be considered as examples only. Therefore, those of ordinary skill in the art should realize that various changes and modifications may be made to the embodiments described herein without departing from the scope and spirit of the present disclosure. Similarly, for clarity and conciseness, descriptions of well-know functions and structures are omitted in the following description.

It should be noted that the embodiments in the present disclosure and the features in the embodiments may be combined with each other on a non-conflict basis. The present disclosure will be described below in detail with reference to the accompanying drawings and in combination with the embodiments.

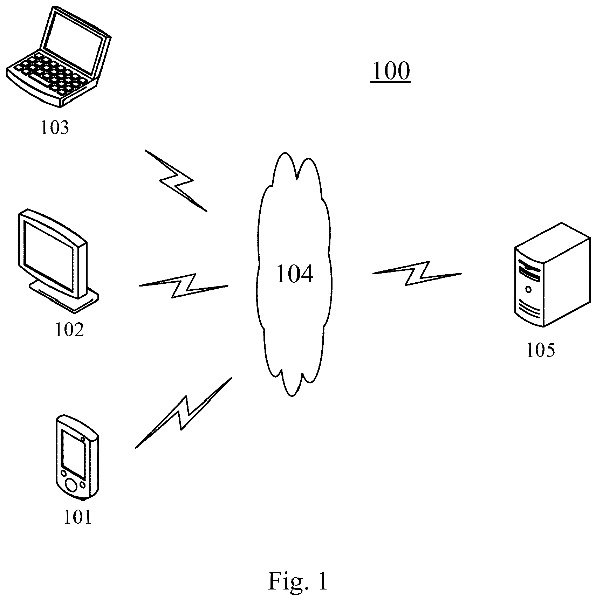

Fig. 1 illustrates an example system architecture 100 to which an embodiment of a method for processing an image or an apparatus for processing an image of the present disclosure may be applied.

As illustrated in Fig. 1, the system architecture 100 may include terminal devices 101, 102, 103, a network 104 and a server 105. The network 104 serves as a medium for providing a communication link between the terminal devices 101, 102, 103 and the server 105. The network 104 may include various types of connections, such as wired or wireless communication links, or optical fiber cables.

A user may use the terminal devices 101, 102, 103 to interact with the server 105 through the network 104 to receive or send messages. For example, a user may acquire an image with a stamp through the terminal devices 101, 102, 103 and send the image to the server 105. The terminal devices may be connected with an image acquisition device for acquiring an image with a stamp. Various communication client applications, such as image processing applications, social platform applications and the like, may be installed on the terminal devices 101, 102, 103.

The terminal devices 101, 102, 103 may be hardware or software. When the terminal devices 101, 102, 103 are hardware, the terminal devices 101, 102, 103 may be various electronic devices, including but not limited to a smart phone, a tablet computer, an on-board computer, a laptop computer and a desktop computer. When the terminal devices 101, 102, 103 are software, the terminal devices 101, 102, 103 may be installed in the electronic devices, and may be implemented as multiple software pieces or software modules (such as for providing distributed services), or as a single software piece or software module, which is not specifically limited herein.

The server 105 may be a server providing various services, such as a background server processing the image sent by the terminal devices 101, 102, 103. The background server may perform stamp detection and recognition on the received image, and feed back the recognized text to the terminal devices 101, 102, 103.

It should be noted that the server 105 may be hardware or software. When the server 105 is hardware, the server 105 may be implemented as a distributed server cluster composed of multiple servers, or as a single server. When the server 105 is software, the server 105 may be implemented as multiple software pieces or software modules (such as for providing distributed services), or as a single software piece or software module, which is not specifically limited herein.

It should be noted that the method for processing an image provided by the embodiment of the present disclosure may be executed by the terminal devices 101, 102, 103, or may be executed by the server 105. Correspondingly, the apparatus for processing an image may be arranged in the terminal devices 101, 102, 103, or may be arranged in the server 105. It should be noted that if the method for processing an image is executed by the terminal devices 101, 102, 103, the architecture diagram may alternatively not include the network 104 and the server 105.

It should be appreciated that the number of the terminal devices, the network and the server in Fig. 1 is merely illustrative. Any number of terminal devices, networks and servers may be provided according to actual requirements.

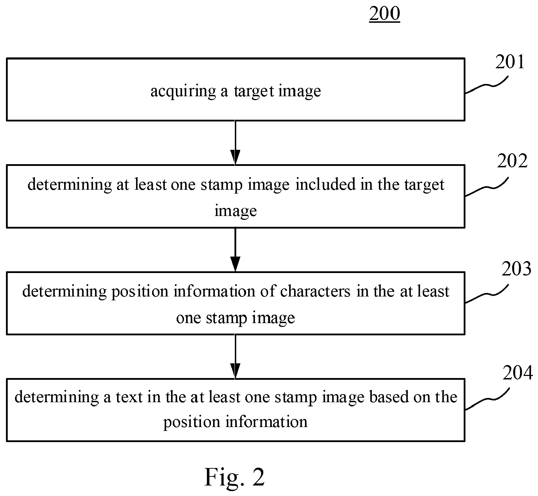

Further referring to Fig. 2, a flow 200 of an embodiment of the method for processing an image according to the present disclosure is illustrated. The flow 200 includes steps 201 to 204.

Step 201 includes acquiring a target image.

In this embodiment, an execution body of the method for processing an image may acquire the target image in various ways. For example, an image is acquired in real time through a connected image acquisition device, or a target image is acquired through an application program installed in the connected image acquisition device. At least one stamp may be included in the target image. The color and shape of the stamp are not limited herein, that is, the stamp may be black, red or the like, or may be a circular stamp, an elliptical stamp, a square stamp or the like.

Step 202 includes determining at least one stamp image included in the target image.

After obtaining the target image, the execution body may perform stamp detection on the target image to obtain at least one stamp image. Specifically, the execution body may input the target image into a pre-trained stamp detection model, and an obtained output result is the stamp image. Alternatively, the execution body may first recognize a circle, an ellipse or a rectangle in the target image. Then, the execution body may recognize a text in the circle, the ellipse or the rectangle. If the recognized text includes a particular text (for example, "company" or "stamp"), the circle, the ellipse, or the rectangle is a stamp image.

Step 203 includes determining position information of characters in the at least one stamp image.

For each stamp image, the execution body may determine position information of each character in the stamp image. The stamp image may include multiple characters, each of which is located differently in the stamp image. The execution body may determine the position information of each character in various ways. For example, the execution body may input each stamp image into a pre-trained character position determination model, and an obtained output result is the position information of each character in the stamp image. The position information may include a center position of the character, a size and position of a rectangular box where the character is located, and position information of the character relative to other characters.

Step 204 includes determining a text in the at least one stamp image based on the position information.

After determining the position information of each character in each stamp image, the execution body may determine the text in each stamp image. Specifically, the execution body may recognize characters in the rectangular boxes according to the sizes and positions of the rectangular boxes where the characters are located. Then, the sorting order of the characters is determined in combination with the center positions of the characters and the position information relative to the other characters, so that the text in each stamp image is obtained.

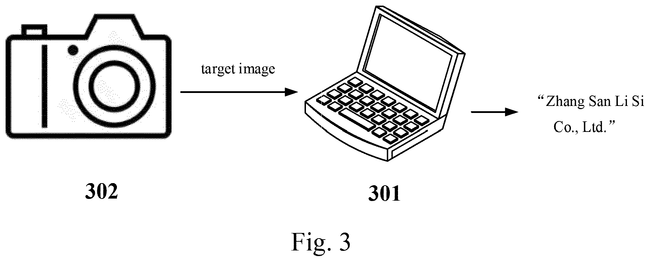

Further referring to Fig. 3, a schematic diagram of an application scenario of the method for processing an image according to the present application is illustrated. In the application scenario of Fig. 3, a user acquires a target image with a stamp image through an image acquisition device 302 connected to a terminal 301. Then, after processing the target image as described in steps 202 to 204, a text in the stamp image is obtained as "Zhang San Li Si Co., Ltd.". The terminal 301 may output the text for copying or performing other processing by the user.

The method for processing an image according to the embodiment of the present disclosure may recognize stamps in images and texts in the stamps through simple steps.

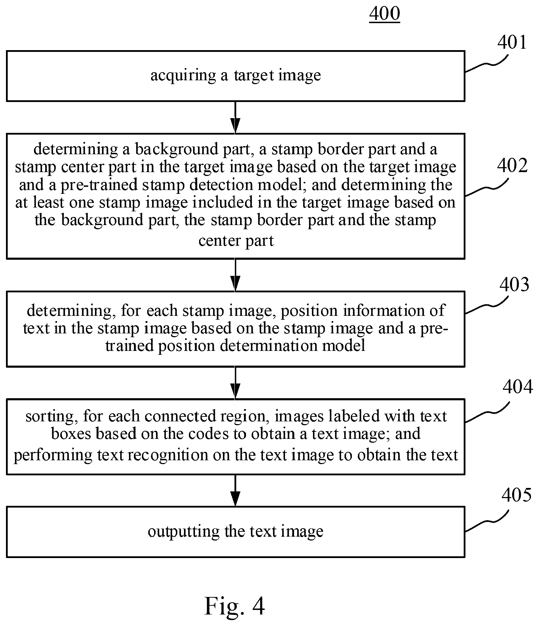

Further referring to Fig, 4, a flow 400 of another embodiment of the method for processing an image according to the present disclosure is illustrated. As illustrated in Fig. 4, the method of this embodiment may include steps 401 to 405.

Step 401 includes acquiring a target image.

Step 402 includes determining a background part, a stamp border part and a stamp center part in the target image based on the target image and a pre-trained stamp detection model; and determining at least one stamp image included in the target image based on the background part, the stamp border part and the stamp center part.

In this embodiment, the execution body may input the target image into the pre-trained stamp detection model to obtain the background part, the stamp border part and the stamp center part in the target image. The background part may refer to an area outside the stamp image, the stamp border part may refer to an area where the border of the stamp is located, and the stamp center part may refer to a center part of the stamp. The stamp border part may include the border of the stamp, such as a circle, an ellipse, a rectangle or the like. The center part of the stamp may include some graphics, such as pentagram, or may not include any graphics.

After obtaining the background part, the stamp border part and the stamp center part, the execution body may determine the stamp image. Specifically, the execution body may use an area corresponding to the stamp border part and the stamp center part as the stamp image. Alternatively, the execution body may determine a circumscribed rectangle of the stamp border in the background part, and use an image in the circumscribed rectangle as the stamp image.

Step 403 includes determining, for each stamp image, position information of text in the stamp image based on the stamp image and a pre-trained position determination model.

The execution body may input each stamp image into the pre-trained position determination model to determine the position information of the text in the stamp image. The position determination model is used to represent a corresponding relationship between the stamp image and the position information of the text. The position determination model may be implemented by various algorithms, such as a convolutional neural network. The position information may include a connected region of the text, center positions of characters, and sorting order of the characters. The connected region of the text may be a region where the text is connected, the center positions of the characters may be the positions of the center points of the characters, and the sorting order of the characters may refer to the positions of the characters in the text.

In some alternative implementations of this embodiment, the position determination model may be determined through following steps (not shown in Fig. 4) of: acquiring a set of training samples, the training samples including a stamp image, a labeled connected region and labeled text boxes; processing the text box to obtain center positions and sorting order of characters; and training to obtain the position determination model, by using the stamp image as an input, and using the connected region of the input stamp image, and the center positions and the sorting order of the characters of the input stamp image, as an expected output.

In this implementation, the set of the training samples is first acquired. The training samples may include a stamp image, a labeled connected region, labeled text boxes and an order of the text boxes. The text box is a text box for each character. The execution body may process the training samples, that is, the text box of each character is shrank toward its center to obtain a shrank area, and the shrank area represents the center area of the character. For example, the text box is represented by four parameters cₓ, c_{y}, w, h, where cₓ, c_{y} represent the coordinate of the center point of the text box and w, h represent the width and height of the text box. The shrank area is represented by four parameters cₓ, c_{y}, r*w, and r*h, where r is a shrinking ratio.

After determining the center area of the character, for each center area, the execution body may obtain a code of each center area according to a relative position of each character in a character sequence. The code is used to represent the relative position of each character in the character sequence. For example, the maximum length of the character sequence is L, and for each character, the code of the center area of each character may be calculated by the following formula: pᵢ=1-i/L, pᵢ represents the i^{th} center area, and i may be any integer between 1 to L.

After processing the training samples, the execution body may perform training to obtain the position determination model, by using the stamp image as an input, and using the center area of the character and the code of the center area as an expected output.

It should be noted that the training steps of the position determination model may be performed by the execution body of the method for processing an image of this embodiment, or may be performed by other electronic devices. If other electronic devices perform the training, the other electronic devices may send the trained position determination model to the execution body of the method for processing an image of this embodiment after training the position determination model.

Step 404 includes sorting, for each connected region, images labeled with text boxes based on the codes to obtain a text image; and performing text recognition on the text image to obtain the text.

For each connected region, the execution body may determine an order of characters based on codes of center areas, splice images corresponding to text boxes based on the order to obtain the text image, and recognize the text image to finally obtain the text in the stamp. For example, a text is "Text", the execution body first recognize a connected region of "Text", center areas of letters "T", "e", "x" and "t" and codes of the letters (that is, the code of "T" is 1/4, the code of "e" is 2/4, the code of "x" is 3/4 and the code of "t" is 4/4). The execution body sorts images corresponding to labeled boxes of the letters "T", "e", "x" and "t" to obtain a text image "Text", and finally recognizes the text image to obtain a text "Text".

Step 405 includes outputting the text image.

This embodiment may output the obtained text image for subsequent use.

According to the method for processing an image provided the embodiment of the present disclosure, the stamp image is determined by recognizing the background part, stamp border part and center part of the image, which improves the accuracy of the stamp detection; the text in the stamp is determined by the connected region of the text, the center area of the character and the code of the center area in the stamp image, so that the operation is simple and the recognition result is accurate; and the image corresponding to the text in the stamp may be obtained by rotating the image corresponding to the character.

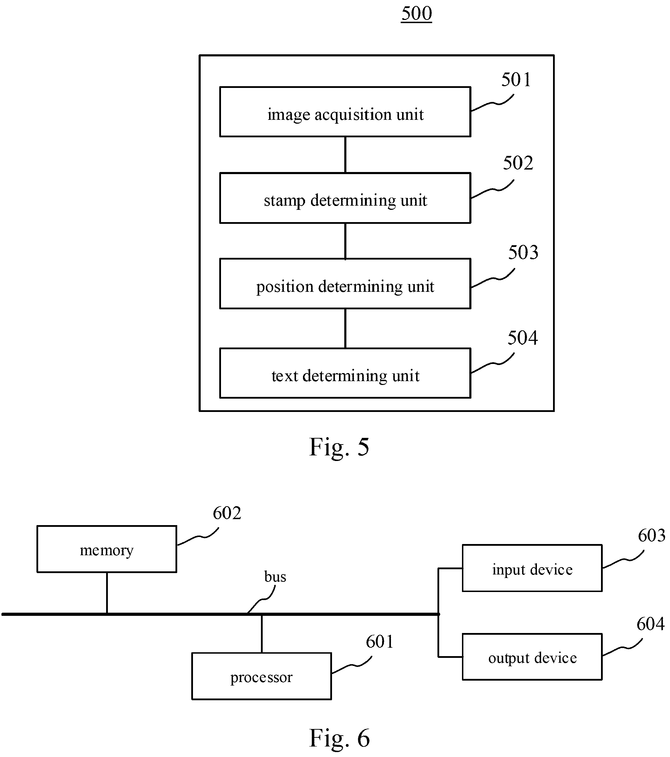

Further referring to Fig. 5, as an implementation of the method illustrated in each of the above figures, the present disclosure provides an embodiment of an apparatus for processing an image. The embodiment of the apparatus corresponds to the embodiment of the method illustrated in Fig. 2, and the apparatus is particularly applicable to various electronic devices.

As illustrated in Fig. 5, the apparatus 500 for processing an image of this embodiment includes: an image acquisition unit 501, a stamp determining unit 502, a position determining unit 503 and a text determining unit 504.

The image acquisition unit 501 is configured to acquire a target image.

The stamp determining unit 502 is configured to determine at least one stamp image included in the target image.

The position determining unit 503 is configured to determine position information of characters in the at least one stamp image.

The text determining unit 504 is configured to determine a text in the at least one stamp image based on the position information.

In some alternative implementations of this embodiment, the stamp determining unit 502 is further configured to: determine a background part, a stamp border part and a stamp center part in the target image based on the target image and a pre-trained stamp detection model; and determine the at least one stamp image included in the target image based on the background part, the stamp border part and the stamp center part.

In some alternative implementations of this embodiment, the position determining unit 503 is further configured to determine, for each stamp image, the position information of the text in the stamp image based on the stamp image and a pre-trained position determination model.

In some alternative implementations of this embodiment, the position information includes: a connected region of the text, center areas of the characters and codes corresponding to the center areas; and the text determining unit 504 is further configured to: sort, for each connected region, images labeled with text boxes based on the codes to obtain a text image; and perform text recognition on the text image to obtain the text.

In some alternative implementations of this embodiment, the apparatus 500 further includes a training unit (not shown in Fig. 5) configured to obtain the position determination model through training steps of: acquiring a set of training samples, the training samples including a stamp image, a labeled connected region and a labeled text box; processing the text box to obtain a center area of a character and a code corresponding to the center area; and training to obtain the position determination model, by using the stamp image as an input, and using the connected region of the stamp, the center area of the character and the code corresponding to the center area as an expected output.

In some alternative implementations of this embodiment, the apparatus 500 further includes a rotation unit (not shown in Fig. 5) configured to output the text image.

It should be appreciated that the units 501 to 504 described in the apparatus 500 for processing an image correspond to the respective steps in the method described with reference to Fig. 2. Therefore, the operations and features described above with respect to the method for processing an image are equally applicable to the apparatus 500 and the units contained in the apparatus 500, and are not described herein again.

According to an embodiment of the present disclosure, the present disclosure further provides an electronic device, a readable storage medium and a computer program product.

Fig. 6 is a block diagram of an electronic device adapted to implement the method for processing an image according to an embodiment of the present disclosure. The electronic device is intended to represent various forms of digital computers, such as laptops, desktops, worktables, personal digital assistants, servers, blade servers, mainframe computers and other suitable computers. The electronic device may also represent various forms of mobile devices, such as personal digital processing, cellular phones, smart phones, wearable devices and other similar computing devices. The parts, their connections and relationships, and their functions illustrated herein are examples only, and are not intended to limit the implementations of the present disclosure as described and/or claimed herein.

As illustrated in Fig. 6, the electronic device includes one or more processors 601, a memory 602 and interfaces for connecting components, including a high-speed interface and a low-speed interface. The components are interconnected by using different buses and may be mounted on a common motherboard or otherwise as required. The processor may process instructions executed within the electronic device, including instructions stored in memory or on memory to display graphical information of the GUI on an external input or output device (such as a display device coupled to an interface). In other embodiments, multiple processors and/or multiple buses and multiple memories may be used with multiple memories, if needed. Similarly, multiple electronic devices may be connected (for example, used as a server array, a set of blade servers or a multiprocessor system), and the electronic device provides some of the necessary operations. An example of a processor 601 is illustrated in Fig. 6.

The memory 602 is a non-transitory computer readable storage medium according to the present disclosure. The memory stores instructions executable by at least one processor to cause the at least one processor to execute the method for processing an image according to the present disclosure. The non-transitory computer readable storage medium of the present disclosure stores computer instructions for causing a computer to execute the method for processing an image according to the present disclosure.

As a non-transitory computer readable storage medium, the memory 602 may be used to store non-transitory software programs, non-transitory computer executable programs and modules, such as the program instructions or modules corresponding to the method for processing an image in the embodiment of the present disclosure (for example, the image acquisition unit 501, the stamp determining unit 502, the position determining unit 503 and the text determining unit 504 illustrated in Fig. 5). The processor 601 runs the non-transitory software programs, instructions and modules stored in the memory 602 to execute various functional applications and data processing of the server, thereby implementing the method for processing an image in the embodiment of the method.

The various embodiments of the systems and techniques described herein may be implemented in digital electronic circuit systems, integrated circuit systems, field programmable gate arrays (FPGA), application specific integrated circuits (ASIC), application special standard products (ASSP), system on chips (SOC), load programmable logic devices (CPLD), computer hardware, firmware, software and/or combinations thereof. The various embodiments may include: being implemented in one or more computer programs, where the one or more computer programs may be executed and/or interpreted on a programmable system including at least one programmable processor, and the programmable processor may be a dedicated or general-purpose programmable processor, which may receive data and instructions from a memory system, at least one input device and at least one output device, and send the data and instructions to the memory system, the at least one input device and the at least one output device.

Program codes for implementing the method of the present disclosure may be written in any combination of one or more programming languages. These program codes may be packaged into computer program products. These program codes or computer program products may be provided to a processor or controller of a general purpose computer, special purpose computer or other programmable data processing apparatus such that the program codes, when executed by the processor 601, enables the functions or operations specified in the flowcharts and/or block diagrams being implemented. The program codes may be executed entirely on the machine, executed partly on the machine, executed as a stand-alone software package partly on the machine and partly on the remote machine, or executed entirely on the remote machine or server.

The memory 602 may include a storage program area and a storage data area, where the storage program area may store an operating system and an application program required by at least one function; and the storage data area may store data created by the electronic device when executing the method for processing an image. In addition, the memory 602 may include a high-speed random access memory, and may further include a non-transitory memory, such as at least one magnetic disk storage device, a flash memory or other non-transitory solid state storage devices. In some embodiments, the memory 602 may alternatively include a memory disposed remotely relative to the processor 601, which may be connected through a network to the electronic device adapted to execute the method for processing an image. Examples of such networks include, but are not limited to, the Internet, enterprise intranets, local area networks, mobile communication networks and combinations thereof.

The electronic device adapted to execute the method for processing an image may further include an input device 603 and an output device 604. The processor 601, the memory 602, the input device 603 and the output device 604 may be interconnected through a bus or other means, and an example of a connection through the bus is illustrated in Fig. 6.

The input device 603 may receive input digit or character information, and generate key signal input related to user settings and functional control of the electronic device adapted to execute the method for processing an image, such as a touch screen, a keypad, a mouse, a track pad, a touch pad, a pointer bar, one or more mouse buttons, a trackball or a joystick. The output device 604 may include a display device, an auxiliary lighting device (such as an LED) and a tactile feedback device (such as a vibration motor). The display device may include, but is not limited to, a liquid crystal display (LCD), a light emitting diode (LED) display and a plasma display. In some embodiments, the display device may be a touch screen.

The various embodiments of the systems and technologies described herein may be implemented in digital electronic circuit systems, integrated circuit systems, ASICs (application specific integrated circuits), computer hardware, firmware, software and/or combinations thereof. The various embodiments may include: being implemented in one or more computer programs, where the one or more computer programs may be executed and/or interpreted on a programmable system including at least one programmable processor, and the programmable processor may be a dedicated or general-purpose programmable processor, which may receive data and instructions from a memory system, at least one input device and at least one output device, and send the data and instructions to the memory system, the at least one input device and the at least one output device.

These computing programs (also known as programs, software, software applications or code) include machine instructions of a programmable processor and may be implemented in high-level procedures and/or object-oriented programming languages, and/or assembly or machine languages. As used herein, the terms "machine readable medium" and "computer readable medium" refer to any computer program product, device and/or apparatus (such as magnetic disk, optical disk, memory and programmable logic device (PLD)) for providing machine instructions and/or data to a programmable processor, including a machine readable medium that receives machine instructions as machine readable signals. The term "machine readable signal" refers to any signal used to provide machine instructions and/or data to a programmable processor.

To provide interaction with a user, the systems and technologies described herein may be implemented on a computer having: a display device (such as a CRT (cathode ray tube) or LCD (liquid crystal display) monitor) for displaying information to the user; and a keyboard and a pointing device (such as a mouse or a trackball) through which the user may provide input to the computer. Other types of devices may also be used to provide interaction with the user. For example, the feedback provided to the user may be any form of sensory feedback (such as visual feedback, auditory feedback or tactile feedback); and input from the user may be received in any form, including acoustic input, speech input or tactile input.

The systems and technologies described herein may be implemented in: a computing system including a background component (such as a data server), or a computing system including a middleware component (such as an application server), or a computing system including a front-end component (such as a user computer having a graphical user interface or a web browser through which the user may interact with the implementation of the systems and technologies described herein), or a computing system including any combination of such background component, middleware component or front-end component. The components of the system may be interconnected by any form or medium of digital data communication (such as a communication network). Examples of communication networks include a local area network (LAN), a wide area network (WAN), and the Internet.

The computer system may include a client and a server. The client and the server are typically remote from each other and typically interact through a communication network. The relationship between the client and the server is generated by a computer program running on the corresponding computer and having a client-server relationship with each other.

The technical solutions according to the embodiments of the present disclosure may recognize stamps in images and texts in the stamps through simple steps.

It should be appreciated that the steps of reordering, adding or deleting may be executed using the various forms illustrated above. For example, the steps described in the present disclosure may be executed in parallel or sequentially or in a different order, so long as the expected results of the technical solutions provided in the present disclosure may be realized, and no limitation is imposed herein.

The above specific implementations are not intended to limit the scope of the present disclosure. It should be appreciated by those skilled in the art that various modifications, combinations, sub-combinations, and substitutions may be made depending on design requirements and other factors. Any modification, equivalent and modification that fall within the spirit and principles of the present disclosure are intended to be included within the scope of the present disclosure.

## Claims

1. A method for processing an image, the method comprising:
acquiring (201) a target image;
determining (202) at least one stamp image comprised in the target image;
determining (203) position information of a text in the at least one stamp image; and
determining (204) the text in the at least one stamp image based on the position information.

2. The method according to clam 1, wherein the determining at least one stamp image comprised in the target image, comprises:
determining (402) a background part, a stamp border part and a stamp center part in the target image based on the target image and a pre-trained stamp detection model; and
determining the at least one stamp image comprised in the target image based on the background part, the stamp border part and the stamp center part.

3. The method according to claim 1 or 2, wherein the determining position information of a text in the at least one stamp image, comprises:
determining (403), for the at least one stamp image, the position information of the text in the at least one stamp image based on the at least one stamp image and a pre-trained position determination model.

4. The method according to claim 3, wherein the position information comprises: a connected region of the text, center areas of characters and codes corresponding to the center areas; and the determining a text in the at least one stamp image based on the position information, comprises:
sorting (404), for each connected region, images labeled with text boxes based on the codes to obtain a text image; and
performing text recognition on the text image to obtain the text.

5. The method according to claim 3 or 4, wherein the position determination model is obtained through training steps of:
acquiring a set of training samples, the training samples comprising a stamp image, a labeled connected region and a labeled text box;
processing the text box to obtain a center area of a character and a code corresponding to the center area; and
training to obtain the position determination model, by using the stamp image as an input, and using the connected region of the stamp image, the center area of the character and the code corresponding to the center area as an expected output.

6. The method according to claim 4 or 5, wherein the method further comprises:
outputting the text image.

7. An apparatus for processing an image, the apparatus comprising:
an image acquisition unit (501), configured to acquire a target image;
a stamp determining unit (502), configured to determine at least one stamp image comprised in the target image;
a position determining unit (503), configured to determine position information of a text in the at least one stamp image; and
a text determining unit (504), configured to determine the text in the at least one stamp image based on the position information.

8. The apparatus according to claim 7 or 8, wherein the stamp determining unit is further configured to:
determine a background part, a stamp border part and a stamp center part in the target image based on the target image and a pre-trained stamp detection model; and
determine the at least one stamp image comprised in the target image based on the background part, the stamp border part and the stamp center part.

9. The apparatus according to claim 7, wherein the position determining unit is further configured to:
determine, for the at least one stamp image, the position information of the text in the at least one stamp image based on the at least one stamp image and a pre-trained position determination model.

10. The apparatus according to claim 9, wherein the position information comprises: a connected region of the text, center areas of characters and codes corresponding to the center areas; and the text determining unit is further configured to:
sort, for each connected region, images labeled with text boxes based on the codes to obtain a text image; and
perform text recognition on the text image to obtain the text.

11. The apparatus according to claim 9 or 10, wherein the apparatus further comprises a training unit, configured to obtain the position determination model through training steps of:
acquiring a set of training samples, the training samples comprising a stamp image, a labeled connected region and a labeled text box;
processing the text box to obtain a center area of a character and a code corresponding to the center area; and
training to obtain the position determination model, by using the stamp image as an input, and using the connected region of the stamp image, the center area of the character and the code corresponding to the center area as an expected output.

12. The apparatus according to claim 10 or 11, wherein the apparatus further comprises a rotation unit, configured to output the text image.

13. An electronic device for processing an image, the electronic device comprising:
at least one processor; and
a memory communicatively connected with the at least one processor, wherein the memory stores instructions executable by the at least one processor, and the instructions, when executed by the at least one processor, cause the at least one processor to execute the method according to any one of claims 1 to 6.

14. A non-transitory computer readable storage medium storing computer instructions, wherein the computer instructions cause a computer to execute the method according to any one of claims 1 to 6.

15. A computer program product comprising a computer program, wherein the computer program, when executed by a computer, cause the computer to implement the method according to any one of claims 1 to 6.
